# EUROPEAN PATENT SPECIFICATION

(11) **EP 2 552 135 B1**
(45) Date of publication and mention of the grant of the patent: **14.11.2018**
(21) Application number: 10848216.7
(22) Date of filing: 23.06.2010
(51) Int. Cl.: H04W 4/06, H04W 4/18, H04W 4/12

(54) **METHOD, SYSTEM AND TERMINAL FOR PROCESSING TEXT INFORMATION IN MOBILE MULTIMEDIA BROADCAST**
VERFAHREN, SYSTEM UND ENDGERÄT ZUM BEARBEITEN VON TEXTINFORMATION IN EINEM MULTIMEDIA-BROADCAST
PROCÉDÉ, SYSTÈME ET TERMINAL ADAPTÉS POUR TRAITER DES INFORMATIONS EN MODE TEXTE DANS UN SYSTÈME DE DIFFUSION MULTIMÉDIA MOBILE

(30) Priority: 25.03.2010 CN 201010141487
(43) Date of publication of application: 30.01.2013
(73) Proprietor: ZTE Corporation, Shenzhen, Guangdong 518057 (CN)
(72) Inventor: WU, Qingliang, Shenzhen Guangdong 518057 (CN)
(74) Representative: Prinz & Partner mbB
(86) International application number: PCT/CN2010/074355
(87) International publication number: WO 2011/116554

(56) References cited:
- WO-A1-2008/044085
- CN-A- 101 202 976
- CN-A- 101 526 963
- CN-A- 101 587 373
- CN-A- 101 674 552
- CN-Y- 201 286 115
- US-A1- 2006 132 336
- US-A1- 2009 268 807
- SCHIERL T ET AL: "Mobile Video Transmission Using Scalable Video Coding", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 17, no. 9, 1 September 2007 (2007-09-01), pages 1204-1217, XP011193018, ISSN: 1051-8215, DOI: 10.1109/TCSVT.2007.905528

## Description

### TECHNICAL FIELD

The disclosure relates to the technical field of a mobile multimedia broadcast, particularly to a method, system and terminal for processing text information in a mobile multimedia broadcast.

### BACKGROUND

A mobile multimedia broadcast service, also called mobile television, is a multimedia broadcast technology which arises in recent years. Through a hand-held terminal, in a situation of moving at a high speed, television programs can be watched. The mobile multimedia broadcast service has a plurality of realization technologies, such as Multimedia Broadcast Multicast Service (MBMS), Broadcast and Multicast Service (BCMCS) and streaming media technology based on a mobile communication network, and the technology based on a broadcast network, wherein the broadcast network comprises a terrestrial digital broadcast and a satellite digital broadcast. The mobile multimedia service based on the broadcast network has the advantages such as high frequency spectrum utilization rate, high capacity, relatively low construction cost, wide audience and the like, and is widely applied. For example, European Digital Video Broadcast Handheld (DVB-H), American Media Forward Link Only (MediaFLO), China Mobile Multimedia Broadcast (CMMB) and the like are based on the technology of the broadcast network.

When the mobile multimedia broadcast service is used, the terminal can receive character data of the broadcast character data from a network, such as the information of network name, electronic service guide and the like; when the CMMB is used in different countries, the text information in the character data is configured into different character coding format according to the languages and characters of different countries. For example, the coding format GB2312 is used in China, the coding format of BIG5 may be used in Taiwan, the encoding format JIS may be used in Japan, and the like. For the different character coding formats, messy codes are displayed frequently in the situation that the terminal does not understand. Therefore, it is often to see that the frequency channel names in the electronic service guide are messy codes, and the aim of providing correct service information for the terminal cannot be fulfilled.
According to US 20090268807, communication apparatus and methods for providing robust communications are disclosed. For example, an exemplary communication apparatus for distributing media to one or more receiving apparatus may include receiving circuitry to receive a first wireless multimedia broadcast signal containing at least a first media stream, transmitting circuitry to wirelessly transmit one or more individual media streams simultaneously to the one or more receiving apparatus using one or more wireless transmit signals, and decision circuitry configured to control the transmitting circuitry to transmit the first media stream to at least one receiving apparatus using at least one wireless transmit signal type based on a forward-link data capacity of each wireless channel between the transmitting circuitry and each receiving apparatus.
According to WO 2008044085, a network and data analysis server may be used to monitor network broadcasts for configuration information, check whether the configuration information is valid and transmit updated information to a central service discovery database system. The service discovery database system may be used to repair misconfigured or incomplete configuration information before storing it to a database. Terminals with fast service discovery enabled or that have received misconfigured data through the broadcast network may request configuration data from the service discovery database system. Additionally, terminals and/or network analysis servers may receive broadcast signals through a first network connection while communicating with the database system over a second network connection.

### SUMMARY

The embodiment of the disclosure provides a method, system and terminal for processing text information in a mobile multimedia broadcast, so as to acquire correct text information from a CMMB.

The features of the method and device according to the present disclosure are defined in the independent claims, and the preferable features according to the present invention are defined in the dependent claims.

By using the technical scheme in the invention, the terminal can identify the character encoding format of the character encoding information sent from the network, read out the text information according to the identified character encoding format, and correctly display the text information so as to fulfill the aim of providing correct service information for a user.

### BRIEF DESCRIPTION OF THE DRAWINGS

Fig. 1 is a flowchart for processing text information in a mobile multimedia broadcast in an embodiment of the disclosure;
Fig. 2 is a flowchart for sending mobile multimedia broadcast service information by a network in an embodiment of the disclosure;
Fig. 3 is a flowchart for processing text information in a mobile multimedia broadcast by a terminal in an embodiment of the disclosure;
Fig. 4 is an architecture diagram of a system for processing text information in a mobile multimedia broadcast in an embodiment of the disclosure; and
Fig. 5 is a structural diagram of a terminal in an embodiment of the disclosure.

### DETAILED DESCRIPTION

In the embodiment of the disclosure, a terminal receives mobile multimedia broadcast service information sent from the network, determines a character encoding format corresponding to an character encoding identifier in the mobile multimedia broadcast service information according to a stored correspondence between the character encoding identifier and the character encoding format, reads out text information from character encoding information in the mobile multimedia broadcast service information according to the determined character encoding format, and correctly displays the text information.

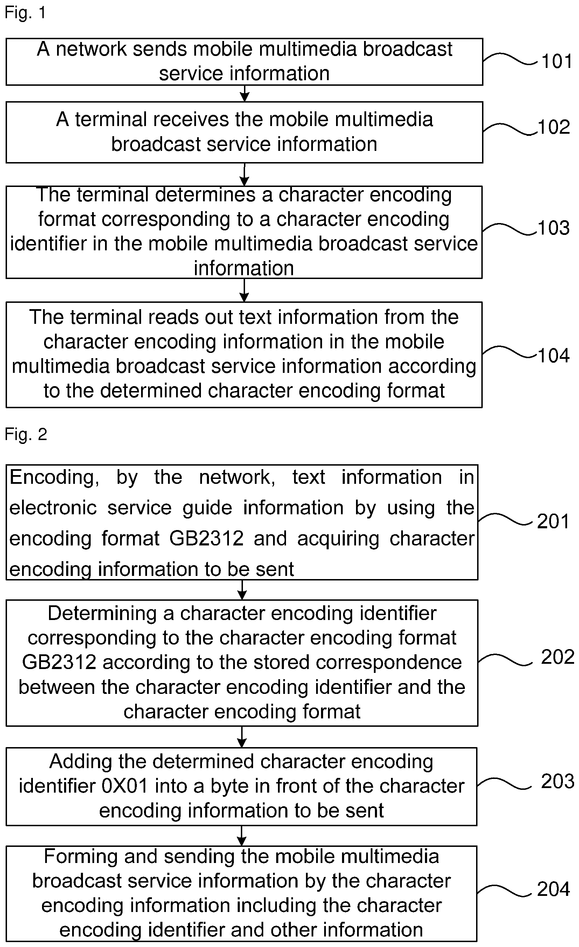

As shown in the Fig. 1, the procedure of processing text information in a mobile multimedia broadcast comprises the following steps.

Step 101: A network sends mobile multimedia broadcast service information.

In a CMMB, when text information needs to be sent, the network encodes the text information to be sent as character encoding information to be sent according to a set character encoding format, determines the character encoding identifier corresponding to the set character encoding format according to the stored correspondence between the character encoding identifier and the character encoding format, forms the mobile multimedia broadcast service information from the determined character encoding identifier, the character encoding information to be sent and other information, and sends mobile multimedia broadcast service information; wherein the other information comprises one or more of control information, picture information, audio information and video information.

In the embodiment of the disclosure, the network can encode the text information to be sent as the character encoding information to be sent according to an operation environment and the set character encoding format. For example, in China, the text information to be sent is encoded as the character encoding information to be sent by using the encoding format of GB2312; in Hongkong, Macao and Taiwan, the text information to be sent is encoded as the character encoding information to be sent by using the encoding format of BIG5; and in Japan, the text information to be sent is encoded as the character encoding information to be sent by using the encoding format of JIS.

Certainly, the network stores the correspondence between the character encoding identifier and the character encoding format, as shown in Table 1:

**Table 1**

| Character encoding identifier | Character encoding format |
|---|---|
| 0X01 | GB-2312 |
| 0X02 | BIG5 |
| 0X03 | KSX-1001 |
| 0X04 | UTF8 |
| ---- | ---- |

Therefore, when using BIG5, namely the set character encoding format is BIG5, in Table 1, the character encoding identifier corresponding to the character encoding format is 0X02; when using GB-2312, namely the set character encoding format is GB-2312, in Table 1, the character encoding identifier corresponding to the character encoding format is 0X01. When other character encoding format is adopted, the corresponding character encoding identifier is also acquired according to Table 1.

Finally, the mobile multimedia broadcast service information is formed from the determined character encoding identifier, the character encoding information to be sent and other information, and is sent together; herein, the character encoding identifier is added into the character encoding information to be sent; and then, the added character encoding information and other information form the mobile multimedia broadcast service information; Or, the character encoding identifier is added into a reserved location for other information; and then, the added other information and the character encoding information form the mobile multimedia broadcast service information.

Step 102: A terminal receives the mobile multimedia broadcast service information.

The terminal receives the mobile multimedia broadcast service information through a broadcast network, wherein the broadcast network comprises a terrestrial digital broadcast and a satellite digital broadcast.

Step 103: The terminal determines a character encoding format corresponding to a character encoding identifier in the mobile multimedia broadcast service information according to a stored correspondence between the character encoding identifier and the character encoding format.

The terminal first parses the character encoding identifier and the character encoding information from the received mobile multimedia broadcast service information, and then determines the character encoding format corresponding to the parsed character encoding identifier according to the stored correspondence between the character encoding identifier and the character encoding format.

Herein, the terminal and the network make an agreement, when the character encoding identifier is added into the character encoding information to be sent by the network, the terminal can acquire the character encoding identifier from the character encoding information in the received mobile multimedia broadcast service information. When the character encoding identifier is added into other information by the network, the terminal can acquire the character encoding identifier from the other information in the received mobile multimedia broadcast service information.

Certainly, in the embodiment of the disclosure, a terminal side also stores the correspondence between the character encoding identifier and the character encoding format, thus the corresponding character encoding format can be acquired according to the correspondence after the character encoding identifier is acquired. For example, the acquired character encoding identifier is 0X03, according to the stored correspondence in Table 1, the character encoding format corresponding to 0X03 can be determined as KSX-1001.

Step 104: The terminal reads out the text information from the character encoding information in the mobile multimedia broadcast service information according to the determined character encoding format.

In above steps, the character encoding format is determined, and the character encoding information is also parsed, thus the text information can be read out from the parsed character encoding information according to the character encoding format to acquire the text information which can be identified by the terminal. Therefore, the terminal can provide correct service information for the user.

In step 101, the procedure of adding the character encoding identifier into the character encoding information to be sent comprises:
adding a byte into the character encoding information, wherein the location of the byte can be in the front, or at the back, or in any location of the character encoding information. The byte is used for indicating the character encoding format, namely the character encoding identifier is added into the byte.

In the embodiment of the disclosure, the character encoding format can also be indicated by extending a reserved word of control information, or the character encoding format can be indicated by extending a reserved bit word in the picture information, the video information and the audio information, thus the character encoding identifier can be added into the reserved location for other information.

The disclosure is further described below with reference to the drawings in detail.

Embodiment 1, in the embodiment, a byte is added into the character encoding information, wherein the byte is used for indicating the character encoding format. The text information to be sent is the character data such as text information in electronic service guide and the like, and the set character encoding format is GB2312. As shown in the Fig. 2, the procedure that the network sends the mobile multimedia broadcast service information comprises the following steps.

Step 201: Encoding, by the network, text information in electronic service guide information by using the encoding format GB2312 and acquiring character encoding information to be sent.

Step 202: Determining a character encoding identifier corresponding to the encoding format GB2312 according to the stored correspondence between the character encoding identifier and the character encoding format.

Herein, the stored correspondence is shown in Table 1. Therefore, the character encoding identifier corresponding to the encoding format GB2312 is 0X01.

Step 203: Adding the determined character encoding identifier 0X01 into a byte in front of the character encoding information to be sent.

In the embodiment, the byte is added in front the character encoding information, wherein the byte is used for indicating the character encoding format. Specific format is shown as Table 2:

**Table 2**

| | |
|---|---|
| Character encoding identifier | Character encoding information |

Thus, 0X01 is added into the byte corresponding to the character encoding identifier in Table 2.

Step 204: Forming and sending the mobile multimedia broadcast service information by the character encoding information including the character encoding identifier and other information,.

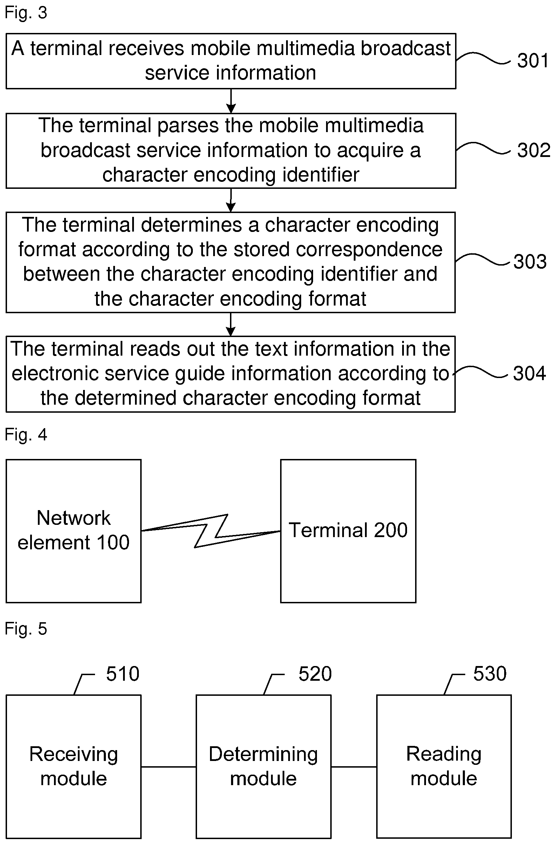

In this way, after the network sends the mobile multimedia broadcast service information based on the broadcast, the terminal receives and processes the mobile multimedia broadcast service information to obtain the text information. As shown in Fig. 3, the procedure of processing by a terminal comprises the following steps.

Step 301: A terminal receives mobile multimedia broadcast service information.

Step 302: The terminal parses the received mobile multimedia broadcast service information to acquire a character encoding identifier.

The terminal and the network agree on the same identifier mode; herein, the terminal acquires the character encoding identifier from the character encoding information in the mobile multimedia broadcast service information, namely acquires the character encoding identifier 0X01 from the first byte of the character encoding information.

Step 303: The terminal determines a character encoding format corresponding to the character encoding identifier according to the stored correspondence between the character encoding identifier and the character encoding format.

Herein, the stored correspondence is shown in Table 1, namely the character encoding format GB2312 corresponding to the character encoding identifier 0X01 is searched.

Step 304: The terminal reads out the text information in the electronic service guide information from the character encoding information in the mobile multimedia broadcast service information, according to the determined character encoding format.

The text information in the electronic service guide information is read out from the character encoding information as shown in Table 2.

Thus, the terminal can acquire the mobile multimedia broadcast service information and acquire the text information sent from the network.

In the embodiment, the stored correspondence between the character encoding identifier and the character encoding format may be in Table 1; and other similar formats can also express the correspondence between the character encoding identifier and the character encoding format.

Certainly, the identifier mode agreed by the network and the terminal is also not limited to add one byte in front of the character encoding information, and the byte is used for indicating the character encoding format. The reserved location for other information used for indicating the character encoding format can also be applied to the embodiment of the disclosure; and specific processes are not repeated.

According to the method for processing the text information in the mobile multimedia broadcast, a system for processing text information in a mobile multimedia broadcast can be structured. As shown in Fig. 4, the system comprises: a network element 100, configured to send mobile multimedia broadcast service information, of the network, and a terminal 200;
the mobile multimedia broadcast service information sent from the network element 100 comprises character encoding information and a character encoding identifier; and
the terminal 200 is configured to receive the mobile multimedia broadcast service information, to determine a character encoding format corresponding to the character encoding identifier in the mobile multimedia broadcast service information according to a stored correspondence between the character encoding identifier and the character encoding format, and to read out text information from the character encoding information in the mobile multimedia broadcast service information according to the determined character encoding format.

In the system, the network element 100 is further configured to encode the text information to be sent as the character encoding information to be sent according to a set character encoding format, to determine the character encoding identifier corresponding to the set character encoding format according to the stored correspondence between the character encoding identifier and the character encoding format, to form the mobile multimedia broadcast service information from the determined character encoding identifier, the character encoding information to be sent and other information, and to send the mobile multimedia broadcast service information; wherein the other information comprises one or more of control information, picture information, audio information and video information.

The network element 100 is further configured to add the character encoding identifier into the character encoding information to be sent to form the mobile multimedia broadcast service information, or to add the character encoding identifier into a reserved location for the other information to form the mobile multimedia broadcast service information.

The terminal 200 is further configured to acquire the character encoding identifier from the character encoding information in the mobile multimedia broadcast service information, or to acquire the character encoding identifier from the other information in the mobile multimedia broadcast service information.

In the embodiment of the disclosure, as shown in Fig. 5, a terminal comprises a receiving module 510, a determining module 520 and a reading module 530;
the receiving module 510 is configured to receive mobile multimedia broadcast service information sent from a network, wherein the mobile multimedia broadcast service information comprises character encoding information and a character encoding identifier;
the determining module 520 is configured to determine a character encoding format corresponding to the character encoding identifier in the mobile multimedia broadcast service information according to a stored correspondence between the character encoding identifier and the character encoding format; and
the reading module 530 is configured to read out text information from the character encoding information in the mobile multimedia broadcast service information according to the determined character encoding format.

The determining module 520 is further configured to acquire the character encoding identifier from the character encoding information in the mobile multimedia broadcast service information, or to acquire the character encoding identifier from other information in the mobile multimedia broadcast service information, wherein the other information comprises one or more of control information, picture information, audio information and video information.

In the embodiment of the disclosure, the terminal receives the mobile multimedia broadcast service information sent from the network, determines the character encoding format corresponding to the character encoding identifier in the mobile multimedia broadcast service information according to the stored correspondence between the character encoding identifier and the character encoding format, and reads out the text information from the character encoding information in the mobile multimedia broadcast service information according to the determined character encoding forma. Thus, the terminal can identify the character encoding format of the character encoding information sent from the network, read out the text information according to the identified character encoding format, and correctly display the text information.

The above are only the preferred embodiments of the disclosure and are not intended to limit the scope of protection of the disclosure.

## Claims

1. A method for processing text information in a mobile multimedia broadcast, the method comprising:
receiving (102) mobile multimedia broadcast service information sent from a network, wherein the mobile multimedia broadcast service information comprises character encoding information and a character encoding identifier;
determining (103) a character encoding format corresponding to the character encoding identifier in the mobile multimedia broadcast service information, according to a stored correspondence between the character encoding identifier and the character encoding format; wherein different character encoding formats correspond to languages and characters of different countries; and
reading out (104) the text information from the character encoding information in the mobile multimedia broadcast service information, according to the determined character encoding format.

2. The method according to claim 1, wherein the sending of the mobile multimedia broadcast service information from the network comprises:
at the network, encoding the text information to be sent as the character encoding information to be sent according to a set character encoding format;
determining the character encoding identifier corresponding to the set character encoding format, according to the stored correspondence between the character encoding identifier and the character encoding format; and
forming the mobile multimedia broadcast service information from the determined character encoding identifier, the character encoding information to be sent and other information, and sending the mobile multimedia broadcast service information,
wherein the other information comprises one or more of control information, picture information, audio information and video information.

3. The method according to claim 2, wherein the forming the mobile multimedia broadcast service information comprises:
forming the mobile multimedia broadcast service information by adding the character encoding identifier into the character encoding information to be sent; or
forming the mobile multimedia broadcast service information by adding the character encoding identifier into a reserved location for the other information.

4. The method according to claim 3, wherein the determining the character encoding format corresponding to the character encoding identifier in the mobile multimedia broadcast service information comprises:
acquiring the character encoding identifier from the character encoding information in the mobile multimedia broadcast service information; or
acquiring the character encoding identifier from the other information in the mobile multimedia broadcast service information.

5. A system for processing text information in a mobile multimedia broadcast, the system comprising :
a network element (100), configured to send mobile multimedia broadcast service information, wherein the mobile multimedia broadcast service information comprises character encoding information and a character encoding identifier; and
a terminal (200), configured to receive the mobile multimedia broadcast service information, to determine a character encoding format corresponding to the character encoding identifier in the mobile multimedia broadcast service information according to a stored correspondence between the character encoding identifier and the character encoding format, and to read out the text information from the character encoding information in the mobile multimedia broadcast service information according to the determined character encoding format;
wherein different character encoding formats correspond to languages and characters of different countries.

6. The system according to claim 5, wherein the network element, in sending the mobile multimedia broadcast service information, is further configured to encode the text information to be sent as the character encoding information to be sent according to a set character encoding format, to determine the character encoding identifier corresponding to the set character encoding format according to the stored correspondence between the character encoding identifier and the character encoding format, to form the mobile multimedia broadcast service information from the determined character encoding identifier, the character encoding information to be sent and other information, and to send the mobile multimedia broadcast service information,
wherein the other information comprises one or more of control information, picture information, audio information and video information.

7. The system according to claim 6, wherein the network element, in forming the mobile multimedia broadcast service information, is further configured to add the character encoding identifier into the character encoding information to be sent to form the mobile multimedia broadcast service information,
or, to add the character encoding identifier into a reserved location for the other information to form the mobile multimedia broadcast service information.

8. The system according to claim 6, wherein the terminal, in determining the character encoding format corresponding to the character encoding identifier in the mobile multimedia broadcast service information, is further configured to acquire the character encoding identifier from the character encoding information in the mobile multimedia broadcast service information,
or, to acquire the character encoding identifier from the other information in the mobile multimedia broadcast service information.

9. A terminal comprising:
a receiving module (510), configured to receive mobile multimedia broadcast service information sent from a network;
a determining module (520), configured to determine a character encoding format corresponding to a character encoding identifier in the mobile multimedia broadcast service information according to a stored correspondence between the character encoding information and the character encoding identifier; wherein different character encoding formats correspond to languages and characters of different countries; and
a reading module (530), configured to read out text information from the character encoding information in the mobile multimedia broadcast service information according to the determined character encoding format.

10. The terminal according to claim 9, wherein the determining module (520), in determining the character encoding format corresponding to the character encoding identifier in the mobile multimedia broadcast service information, is further configured to acquire the character encoding identifier from the character encoding information in the mobile multimedia broadcast service information;
or, to acquire the character encoding identifier from other information in the mobile multimedia broadcast service information,
wherein the other information comprises one or more of control information, picture information, audio information and video information.

## Patentansprüche

1. Verfahren zur Verarbeitung von Textinformationen in einer mobilen Multimediaübertragung, wobei das Verfahren Folgendes umfasst:
Empfangen (102) von Dienstinformationen der mobilen Multimediaübertragung, die aus einem Netzwerk gesendet werden, wobei die Dienstinformationen der mobilen Multimediaübertragung Zeichencodierungsinformationen und eine Zeichencodierungskennung umfassen;
Bestimmen (103) eines Zeichencodierungsformats, das der Zeichencodierungskennung in den Dienstinformationen der mobilen Multimediaübertragung entspricht, gemäß einer gespeicherten Entsprechung zwischen der Zeichencodierungskennung und dem Zeichencodierungsformat; wobei unterschiedliche Zeichencodierungsformate Sprachen und Zeichen unterschiedlicher Länder entsprechen; und
Auslesen (104) der Textinformationen aus den Zeichencodierungsinformationen in den Dienstinformationen der mobilen Multimediaübertragung gemäß dem bestimmten Zeichencodierungsformat.

2. Verfahren nach Anspruch 1, bei dem das Senden der Dienstinformationen der mobilen Multimediaübertragung aus dem Netzwerk Folgendes umfasst:
netzwerkseitiges Codieren der zu sendenden Textinformationen als die zu sendenden Zeichencodierungsinformationen gemäß einem festgelegten Zeichencodierungsformat;
Bestimmen der Zeichencodierungskennung, die dem festgelegten Zeichencodierungsformat entspricht, gemäß der gespeicherten Entsprechung zwischen der Zeichencodierungskennung und dem Zeichencodierungsformat; und
Bilden der Dienstinformationen der mobilen Multimediaübertragung aus der bestimmten Zeichencodierungskennung, den zu sendenden Zeichencodierungsinformationen und anderen Informationen und Senden der Dienstinformationen der mobilen Multimediaübertragung,
wobei die anderen Informationen Steuerinformationen, Bildinformationen, Audioinformationen und/oder Videoinformationen umfassen.

3. Verfahren nach Anspruch 2, bei dem das Bilden der Dienstinformationen der mobilen Multimediaübertragung Folgendes umfasst:
Bilden der Dienstinformationen der mobilen Multimediaübertragung durch Hinzufügen der Zeichencodierungskennung in die zu sendenden Zeichencodierungsinformationen; oder
Bilden der Dienstinformationen der mobilen Multimediaübertragung durch Hinzufügen der Zeichencodierungskennung in eine reservierte Stelle für die anderen Informationen.

4. Verfahren nach Anspruch 3, bei dem das Bestimmen des Zeichencodierungsformats, das der Zeichencodierungskennung in den Dienstinformationen der mobilen Multimediaübertragung entspricht, Folgendes umfasst:
Erfassen der Zeichencodierungskennung aus den Zeichencodierungsinformationen in den Dienstinformationen der mobilen Multimediaübertragung; oder
Erfassen der Zeichencodierungskennung aus den anderen Informationen in den Dienstinformationen der mobilen Multimediaübertragung.

5. System zur Verarbeitung von Textinformationen in einer mobilen Multimediaübertragung, wobei das System Folgendes umfasst:
ein Netzelement (100), das so ausgebildet ist, dass es Dienstinformationen der mobilen Multimediaübertragung sendet, wobei die Dienstinformationen der mobilen Multimediaübertragung Zeichencodierungsinformationen und eine Zeichencodierungskennung umfassen; und
ein Endgerät (200), das so ausgebildet ist, dass es die Dienstinformationen der mobilen Multimediaübertragung empfängt, ein Zeichencodierungsformat, das der Zeichencodierungskennung in den Dienstinformationen der mobilen Multimediaübertragung entspricht, gemäß einer gespeicherten Entsprechung zwischen der Zeichencodierungskennung und dem Zeichencodierungsformat bestimmt, und die Textinformationen aus den Zeichencodierungsinformationen in den Dienstinformationen der mobilen Multimediaübertragung gemäß dem bestimmten Zeichencodierungsformat ausliest;
wobei unterschiedliche Zeichencodierungsformate Sprachen und Zeichen unterschiedlicher Länder entsprechen.

6. System nach Anspruch 5, bei dem das Netzelement beim Senden der Dienstinformationen der mobilen Multimediaübertragung ferner so ausgebildet ist, dass es die zu sendenden Textinformationen als die zu sendenden Zeichencodierungsinformationen gemäß einem festgelegten Zeichencodierungsformat codiert, die Zeichencodierungskennung, die dem festgelegten Zeichencodierungsformat entspricht, gemäß der gespeicherten Entsprechung zwischen der Zeichencodierungskennung und dem Zeichencodierungsformat bestimmt, die Dienstinformationen der mobilen Multimediaübertragung aus der bestimmten Zeichencodierungskennung, den zu sendenden Zeichencodierungsinformationen und anderen Informationen bildet und die Dienstinformationen der mobilen Multimediaübertragung sendet,
wobei die anderen Informationen Steuerinformationen, Bildinformationen, Audioinformationen und/oder Videoinformationen umfassen.

7. System nach Anspruch 6, bei dem das Netzelement beim Bilden der Dienstinformationen der mobilen Multimediaübertragung ferner so ausgebildet ist, dass es die Zeichencodierungskennung in die zu sendenden Zeichencodierungsinformationen hinzufügt, um die Dienstinformationen der mobilen Multimediaübertragung zu bilden,
oder die Zeichencodierungskennung in eine reservierte Stelle für die anderen Informationen hinzufügt, um die Dienstinformationen der mobilen Multimediaübertragung zu bilden.

8. System nach Anspruch 6, bei dem das Endgerät beim Bestimmen des Zeichencodierungsformats, das der Zeichencodierungskennung in den Dienstinformationen der mobilen Multimediaübertragung entspricht, ferner so ausgebildet ist, dass es die Zeichencodierungskennung aus den Zeichencodierungsinformationen in den Dienstinformationen der mobilen Multimediaübertragung erfasst
oder die Zeichencodierungskennung aus den anderen Informationen in den Dienstinformationen der mobilen Multimediaübertragung erfasst.

9. Endgerät mit:
einem Empfangsmodul (510), das so ausgebildet ist, dass es aus einem Netzwerk gesendete Dienstinformationen einer mobilen Multimediaübertragung empfängt;
einem Bestimmungsmodul (520), das so ausgebildet ist, dass es ein Zeichencodierungsformat, das einer Zeichencodierungskennung in den Dienstinformationen der mobilen Multimediaübertragung entspricht, gemäß einer gespeicherten Entsprechung zwischen den Zeichencodierungsinformationen und der Zeichencodierungskennung bestimmt; wobei unterschiedliche Zeichencodierungsformate Sprachen und Zeichen unterschiedlicher Länder entsprechen; und
einem Lesemodul (530), das so ausgebildet ist, dass es Textinformationen aus den Zeichencodierungsinformationen in den Dienstinformationen der mobilen Multimediaübertragung gemäß dem bestimmten Zeichencodierungsformat ausliest.

10. Endgerät nach Anspruch 9, bei dem das Bestimmungsmodul (520) beim Bestimmen des Zeichencodierungsformats, das der Zeichencodierungskennung in den Dienstinformationen der mobilen Multimediaübertragung entspricht, ferner so ausgebildet ist, dass es die Zeichencodierungskennung aus den Zeichencodierungsinformationen in den Dienstinformationen der mobilen Multimediaübertragung erfasst
oder die Zeichencodierungskennung aus anderen Informationen in den Dienstinformationen der mobilen Multimediaübertragung erfasst,
wobei die anderen Informationen Steuerinformationen, Bildinformationen, Audioinformationen und/oder Videoinformationen umfassen.

## Revendications

1. Procédé de traitement d'informations textuelles dans une diffusion multimédia mobile, le procédé comprenant :
la réception (102) d'informations de service de la diffusion multimédia mobile envoyées depuis un réseau, les informations de service de la diffusion multimédia mobile comprenant des informations de codage de caractères et une identification de codage de caractères ;
la détermination (103) d'un format de codage de caractères correspondant à l'identification de codage de caractères dans les informations de service de la diffusion multimédia mobile conformément à une correspondance mémorisée entre l'identification de codage de caractères et le format de codage de caractères, différents formats de codage de caractères correspondant à des langues et à des caractères de pays différents ; et
l'extraction (104) des informations textuelles des informations de codage de caractères dans les informations de service de la diffusion multimédia mobile conformément au format de codage de caractères déterminé.

2. Procédé selon la revendication 1, dans lequel l'envoi des informations de service de la diffusion multimédia mobile depuis le réseau comprend :
le codage, au niveau du réseau, des informations textuelles à envoyer en tant qu'informations de codage de caractères à envoyer conformément à un format de codage de caractères fixé ;
la détermination de l'identification de codage de caractères correspondant au format de codage de caractères fixé conformément à la correspondance mémorisée entre l'identification de codage de caractères et le format de codage de caractères ; et
la création des informations de service de la diffusion multimédia mobile à partir de l'identification de codage de caractères déterminée, des informations de codage de caractères à envoyer et d'autres informations, et l'envoi des informations de service de la diffusion multimédia mobile,
les autres informations comprenant des informations de commande, des informations image, des informations audio et/ou des informations vidéo.

3. Procédé selon la revendication 2, dans lequel la création des informations de service de la diffusion multimédia mobile comprend :
la création des informations de service de la diffusion multimédia mobile en ajoutant l'identification de codage de caractères dans les informations de codage de caractères à envoyer ; ou
la création des informations de service de la diffusion multimédia mobile en ajoutant l'identification de codage de caractères dans un endroit réservé pour les autres informations.

4. Procédé selon la revendication 3, dans lequel la détermination du format de codage de caractères correspondant à l'identification de codage de caractères dans les informations de service de la diffusion multimédia mobile comprend :
la saisie de l'identification de codage de caractères à partir des informations de codage de caractères dans les informations de service de la diffusion multimédia mobile ; ou
la saisie de l'identification de codage de caractères à partir des autres informations dans les informations de service de la diffusion multimédia mobile.

5. Système de traitement d'informations textuelles dans une diffusion multimédia mobile, le système comprenant :
un élément de réseau (100) qui est réalisé de manière à envoyer des informations de service de la diffusion multimédia mobile, les informations de service de la diffusion multimédia mobile comprenant des informations de codage de caractères et une identification de codage de caractères ; et
un terminal (200) qui est réalisé de manière à recevoir les informations de service de la diffusion multimédia mobile, à déterminer un format de codage de caractères correspondant à l'identification de codage de caractères dans les informations de service de la diffusion multimédia mobile conformément à une correspondance mémorisée entre l'identification de codage de caractères et le format de codage de caractères, et à extraire les informations textuelles des informations de codage de caractères dans les informations de service de la diffusion multimédia mobile conformément au format de codage de caractères déterminé ;
différents formats de codage de caractères correspondant à des langues et à des caractères de pays différents.

6. Système selon la revendication 5, dans lequel l'élément de réseau, lors de l'envoi des informations de service de la diffusion multimédia mobile, est en outre réalisé de manière à coder les informations textuelles à envoyer en tant qu'informations de codage de caractères à envoyer conformément à un format de codage de caractères fixé, à déterminer l'identification de codage de caractères correspondant au format de codage de caractères fixé conformément à la correspondance mémorisée entre l'identification de codage de caractères et le format de codage de caractères, à créer les informations de service de la diffusion multimédia mobile à partir de l'identification de codage de caractères déterminée, des informations de codage de caractères à envoyer et d'autres informations, et à envoyer les informations de service de la diffusion multimédia mobile,
les autres informations comprenant des informations de commande, des informations image, des informations audio et/ou des informations vidéo.

7. Système selon la revendication 6, dans lequel l'élément de réseau, lors de la création des informations de service de la diffusion multimédia mobile, est en outre réalisé de manière à ajouter l'identification de codage de caractères dans les informations de codage de caractères à envoyer pour créer les informations de service de la diffusion multimédia mobile,
ou de manière à ajouter l'identification de codage de caractères dans un endroit réservé pour les autres informations pour créer les informations de service de la diffusion multimédia mobile.

8. Système selon la revendication 6, dans lequel le terminal, lors de la détermination du format de codage de caractères correspondant à l'identification de codage de caractères dans les informations de service de la diffusion multimédia mobile, est en outre réalisé de manière à saisir l'identification de codage de caractères à partir des informations de codage de caractères dans les informations de service de la diffusion multimédia mobile,
ou de manière à saisir l'identification de codage de caractères à partir des autres informations dans les informations de service de la diffusion multimédia mobile.

9. Terminal, comprenant :
un module de réception (510) qui est réalisé de manière à recevoir les informations de service de la diffusion multimédia mobile envoyées depuis un réseau ;
un module de détermination (520) qui est réalisé de manière à déterminer un format de codage de caractères correspondant à l'identification de codage de caractères dans les informations de service de la diffusion multimédia mobile conformément à une correspondance mémorisée entre les informations de codage de caractères et l'identification de codage de caractères ; différents formats de codage de caractères correspondant à des langues et à des caractères de pays différents ; et
un module d'extraction (530) qui est réalisé de manière à extraire des informations textuelles des informations de codage de caractères dans les informations de service de la diffusion multimédia mobile conformément au format de codage de caractères déterminé.

10. Terminal selon la revendication 9, dans lequel le module de détermination (520), lors de la détermination du format de codage de caractères correspondant à l'identification de codage de caractères dans les informations de service de la diffusion multimédia mobile, est en outre réalisé de manière à saisir l'identification de codage de caractères à partir des informations de codage de caractères dans les informations de service de la diffusion multimédia mobile ;
ou de manière à saisir l'identification de codage de caractères à partir des autres informations dans les informations de service de la diffusion multimédia mobile,
les autres informations comprenant des informations de commande, des informations image, des informations audio et/ou des informations vidéo.
